# EUROPEAN PATENT APPLICATION

(11) **EP 3 780 491 A1**
(43) Date of publication of application: **17.02.2021**
(21) Application number: 18911626.2
(22) Date of filing: 27.09.2018
(51) Int. Cl.: H04L 12/24, H04L 29/08

(54) **COMMUNICATION APPARATUS, NODE CONNECTION METHOD, STORAGE MEDIUM, AND ELECTRONIC DEVICE**

(30) Priority: 27.03.2018 CN 201810260565
(71) Applicant: Xi'an Zhongxing New Software Co. Ltd., Xian, Shaanxi 710114 (CN)
(72) Inventor: YANG, Kun, Shenzhen, Guangdong 518057 (CN); LU, Chen, Shenzhen, Guangdong 518057 (CN); XIE, Fang, Shenzhen, Guangdong 518057 (CN)
(74) Representative: Pennacchio, Salvatore Giovanni
(86) International application number: PCT/CN2018/107979
(87) International publication number: WO 2019/184285

(57) **Abstract**

The present application discloses a communication device, a node connection method, a storage medium and an electronic device. The communication device includes: a selection module, configured to select a second node; a control module, configured to establish and/or release a cooperative relationship with the second node; and a monitoring module, configured to, after the cooperative relationship is established with the second node, monitor an active state of the second node. Through the present application, the technical problem in the related art that a node may not be cooperatively monitored and backed up is solved.

## Description

### Technical Field

The present disclosure relates to the field of communications, and particularly to a communication device, a node connection method, a storage medium and an electronic device.

### Background

Along with gradual extension of an application range of Internet of things technologies, more and more "ubiquitous networks/internets of things" with relatively large regional spans have emerged. For covering these ubiquitous networks with relatively large spans, it is usually necessary to use multiple gateways for data collection and transmission at the same time. On another aspect, an environment of a ubiquitous network/Internet of things is complicated and a terminal device is usually unmanned, so communication may be unstable. For improving information transmission reliability and meeting an application requirement of the Internet of things, it is usually necessary to select a cooperative node to implement redundancy backup and recovery of data, thereby promoting efficient network data transmission, achieving network security and communication reliability and meeting a core content of the specific application requirement.

In a related art, a network node in a ubiquitous network/Internet of things may usually collect data of ubiquitous network/Internet of things devices in a region administrated by the network node and periodically upload the data to an application management center. Considering a deployment and scale of the ubiquitous network/Internet of things, an uploading period between a gateway and an application center is usually long. Once a failure occurs to the gateway, on one hand, the application center may find the failure after a relatively long time, and on the other hand, data collected before the failure may be lost and, consequently, a reason for the failure may not be accurately judged.

In the related art, a smart grid monitors an electrical load to make a power supply plan and develop a price regulation solution to ensure electric power utilization safety, reliability and economy. Therefore, safe operation of a grid system is the first problem to be solved for the smart grid. When some electrical devices in the grid trip under excessive loads or are damaged by natural or human factors, the smart grid is required to timely judge reasons for failures. However, since the present smart grid adopts a central structure and collected data is periodically reported to a management center, when a certain electrical device has a problem, the problem may be found after a period of time. In addition, loss of the collected data makes it impossible to judge a reason for the problem.

For the problems in the related art, there is yet no effective solution found at present.

### Summary

Embodiments of the present disclosure provide a communication device, a node connection method, a storage medium and an electronic device.

According to an embodiment of the present disclosure, a communication device is provided, which may include: a selection module, configured to select a second node; a control module, configured to establish and/or release a cooperative relationship with the second node; and a monitoring module, configured to, after the cooperative relationship is established with the second node, monitor an active state of the second node.

According to an embodiment of the present disclosure, a node connection method is provided, which may include that: a first node receives a cooperative node confirmation from a center node, the cooperative node confirmation being configured to indicate an assigned cooperative node; and the first node establishes and/or releases a cooperative relationship with a second node according to the cooperative node confirmation.

According to an embodiment of the present disclosure, another node connection method is provided, which may include that: a second node receives a cooperative relationship establishment request sent by a first node, the cooperative relationship establishment request being generated by the first node according to a cooperative node confirmation sent by a center node; and the second node establishes a cooperative relationship with the first node according to the cooperative relationship establishment request.

According to an embodiment of the present disclosure, another node connection method is provided, which may include that: a third node determines that the third node is a center node of a network, the network including a first node, a second node and the third node; the third node selects the second node as a cooperative node of the first node; and the third node sends a first cooperative node confirmation to the first node, the first cooperative node confirmation being configured to indicate the cooperative node assigned to the first node.

According to an embodiment of the present disclosure, another node connection method is provided, which may include that: a fourth node establishes a connection with a data platform; after the connection is established with the data platform, the fourth node establishes a connection with a terminal; and the fourth node acquires data information collected by the terminal, locally caches the data information and sends the data information to the data platform.

According another embodiment of the present disclosure, a storage medium is also provided, in which a computer program may be stored, the computer program being configured to run to execute the operations in any abovementioned method embodiment.

According to another embodiment of the present disclosure, an electronic device is also provided, which may include a memory and a processor. A computer program may be stored in the memory. The processor may be configured to run the computer program to execute the operations in any abovementioned method embodiment.

Through the embodiments of the present disclosure, by assignment of the center node and establishment and/or release of a cooperative relationship with the second node, all nodes in a topological network may have cooperative nodes, ordinary backup and monitoring between the nodes may be implemented, the technical problem in the related art that a node may not be cooperatively monitored and backed up is solved, and stability and failure resistance of the network are improved.

### Brief Description of the Drawings

The drawings described here are adopted to provide a deeper understanding to the present disclosure and form a part of the present application. Schematic embodiments of the present disclosure and descriptions thereof are adopted to explain the present disclosure and not intended to form improper limits to the present disclosure. In the drawings:
Fig. 1 is a diagram of a network architecture according to an embodiment of the present disclosure;
Fig. 2 is a structure block diagram of a communication device according to an embodiment of the present disclosure;
Fig. 3 is a first flowchart of a node connection method according to an embodiment of the present disclosure;
Fig. 4 is a second flowchart of a node connection method according to an embodiment of the present disclosure;
Fig. 5 is a third flowchart of a node connection method according to an embodiment of the present disclosure;
Fig. 6 is a fourth flowchart of a node connection method according to an embodiment of the present disclosure;
Fig. 7 is a flowchart of a cooperative relationship establishment method according to an embodiment; and
Fig. 8 is a flowchart of a connection establishment method according to an embodiment.

### Detailed Description of the Embodiments

The present disclosure will be described below with reference to the drawings and in combination with the embodiments in detail. It is to be noted that the embodiments in the present application and characteristics in the embodiments may be combined without conflicts.

It is to be noted that the terms like "first" and "second" in the specification, claims and accompanying drawings of the present disclosure are used for differentiating the similar objects, but do not have to describe a specific order or a sequence.

### Embodiment 1

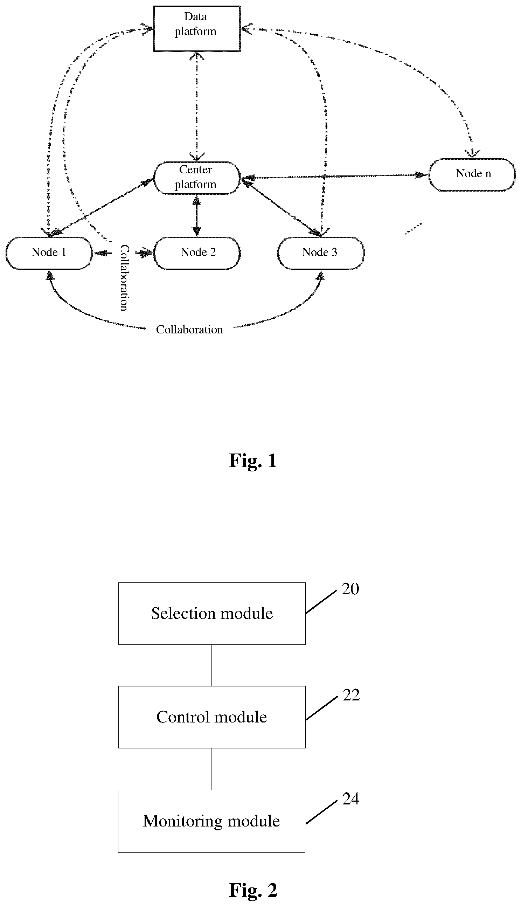

The embodiment of the present application may run in a network architecture shown in Fig. 1. Fig. 1 is a diagram of a network architecture according to an embodiment of the present disclosure. As shown in Fig. 1, the network architecture includes nodes and a data platform. The nodes are divided into ordinary nodes (for example, a node 1, a node 2, ... and a node n) and a center node according to different functions. The center node is any node in the network and has all functions of an ordinary node. A cooperative relationship may be formed between nodes. The nodes are connected with the data platform.

The embodiment also provides a communication device, which is configured to implement the abovementioned embodiments and exemplary implementation modes. What has been described will not be elaborated. For example, term "module" used below may be a combination of software and/or hardware capable of realizing a preset function. Although the device described in the following embodiment is preferably implemented with software, implementation with hardware or a combination of the software and the hardware is also possible and conceivable.

Fig. 2 is a structure block diagram of a communication device according to an embodiment of the present disclosure. As shown in Fig. 2, the communication device includes:
a selection module 20, configured to select a second node;
a control module 22, configured to establish and/or release a cooperative relationship with the second node; and
a monitoring module 24, configured to, after the cooperative relationship is established with the second node, monitor an active state of the second node.

In at least one exemplary embodiment, the selection module includes a first selection unit, configured to, when a network is constructed or a topology of a network changes, determine a center node of the network.

In at least one exemplary embodiment, an executer of the operations may be a communication node, a gateway and the like, and may be, but is not limited to be, applied to a ubiquitous network/Internet of things application such as a smart home system, an Internet of vehicles system, a power grid system and a smart city system.

The executer in the embodiment has functions of both an ordinary node and center node in the network and executes corresponding operations according to its role to realize corresponding functions in different scenarios.

In at least one exemplary embodiment, when the communication device is a center node, the selection module further includes: a configuration unit, configured to configure coding information for each node in a network; and a second selection unit, configured to assign one or more cooperative nodes to one or more nodes in the network according to the coding information.

In the embodiment, when the communication device is a target node (target gateway) selected by the center node in the network, the second node is a cooperative node passively establishing and/or releasing a cooperative relationship, and the control module includes a sending unit, configured to, after a cooperative node confirmation sent by a center node is received, send a cooperative relationship establishment request to the cooperative node selected by the center node. The control module includes: the sending unit, configured to send the cooperative relationship establishment request to the second node; and a determination unit, configured to, after the communication device passes verification and authentication of the second node, establish the cooperative relationship with the second node.

In the embodiment, the communication device is the cooperative node selected by the center node in the network, establishes and/or releases the cooperative relationship with the target gateway according to the received cooperative relationship establishment request of the target gateway and may not receive the cooperative node confirmation sent by the center node, the second node is a cooperative node actively establishing and/or releasing the cooperative relationship, and the control module includes a first confirmation unit, configured to, after a cooperative relationship establishment request sent by the second node is received, determine that a local resource meets a service requirement of the second node, assign a resource to the second node and confirm to establish the cooperative relationship with the second node.

In at least one exemplary embodiment, the control module includes a second confirmation unit, configured to, when cooperative node reselection is performed or a connection is cut off, locally release a related resource of the second node and confirm to release the cooperative relationship with the second node.

In at least one exemplary embodiment, the monitoring module includes a monitoring unit, configured to monitor the active state of the second node according to received active information of the second node. The monitoring module further includes a transmitting unit, configured to, when the active state of the second node indicates that the second node is offline, transmit a notification message configured to indicate that the cooperative node has been offline to the center node.

In the embodiment, when the communication device is a center node, the monitoring module includes a confirming unit, configured to, after the notification message is received, confirm the offline state of the second node which is indicated as the offline state when an attempt to communicate with the second node fails and instruct the selection module to reassign a cooperative node.

In at least one exemplary embodiment, the communication device further includes a management module, configured to implement access management and data management over the communication device.

In at least one exemplary embodiment, the management module includes an access management unit, configured to, after the communication device is started, initiate a first connection establishment request to a data platform, receive a connection confirmation returned by the data platform after the communication device passes authentication and verification, periodically broadcast access information in the network, receive a second connection establishment request sent by a terminal after receiving the access information, receive a registration confirmation returned by the data platform after device registration of the terminal and return a connection confirmation to the terminal. In at least one exemplary embodiment, the terminal includes a sensor, a peripheral device and the like.

In at least one exemplary embodiment, the management module further includes a data management unit, configured to, after the cooperative relationship is established with the second node, receive backup data sent by the second node according to a preset period, delete locally stored backup data beyond a local storage capacity and, after the cooperative relationship is released, upload the backup data of the second node to the data platform.

In at least one exemplary embodiment, the data management unit is further configured to, after a connection is established with the data platform, start a data uploading timer, when the data uploading timer expires, upload presently stored data information collected by the terminal to the data platform, send an instruction configured to request for deleting the locally stored backup data of the communication device to the second node, restart the data uploading timer and, after a connection is established with the terminal, cache the data information collected and periodically reported by the terminal.

It is to be noted that each module may be implemented through software or hardware and, under the latter condition, may be implemented in, but not limited to, the following manner: the modules are all positioned in the same processor, or the modules are positioned in different processors in any combination form respectively.

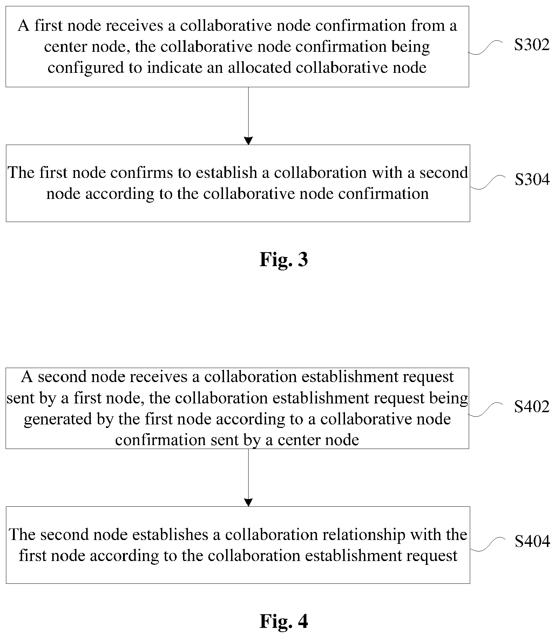

The embodiment provides a node connection method running in the abovementioned network architecture. Fig. 3 is a first flowchart of a node connection method according to an embodiment of the present disclosure. As shown in Fig. 3, the flow includes the following operations.

In S302, a first node receives a cooperative node confirmation from a center node, the cooperative node confirmation being configured to indicate an assigned cooperative node.

In S304, the first node establishes and/or releases a cooperative relationship with a second node according to the cooperative node confirmation. The cooperative node confirmation may be a message or information, signaling, etc.

Through the operations, by assignment of the center node and establishment and/or release of a cooperative relationship with the second node, all nodes in a topological network may have cooperative nodes, ordinary backup and monitoring between the nodes may be implemented, the technical problem in the related art that a node may not be cooperatively monitored and backed up is solved, and stability and failure resistance of the network are improved.

In at least one exemplary embodiment, an executer of the operations may be a communication node, a gateway and the like, and may be, but is not limited to be, applied to a ubiquitous network/Internet of things application such as a smart home system, an Internet of vehicles system, a power grid system and a smart city system. In the embodiment, the first node plays a role as a node actively establishing and/or releasing the cooperative relationship.

In at least one exemplary embodiment, the operation that the first node establishes and/or releases the cooperative relationship with the second node according to assignment information (which may also be called the cooperative node confirmation) includes the following operations.

In S11, the first node sends a cooperative relationship establishment request to the second node according to the assignment information.

In S12, after the first node passes verification and authentication of the second node, the first node establishes the cooperative relationship with the second node.

In at least one exemplary embodiment, after the operation that the first node establishes the cooperative relationship with the second node according to the assignment information, the method further includes that: the first node sends backup data to the second node according to a predetermined period. Meanwhile, backup data sent by the second node according to a predetermined period may also be received.

In at least one exemplary embodiment, after the operation that the first node sends the backup data to the second node according to the predetermined period, the method further includes that: the first node locally deletes the backup data that has been sent. Locally stored backup data beyond a local storage capacity may be deleted according to a storage capability of the node until the local storage capacity does not exceed a predetermined capacity.

In at least one exemplary embodiment, after the operation that the first node establishes the cooperative relationship with the second node according to the assignment information, the method further includes the following operations.

In S21, the first node monitors an active state of the second node.

In S22, the first node determines according to the active state that the second node is in an offline state or an online state.

In at least one exemplary embodiment, after the operation that the first node determines according to the active state that the second node is in the offline state, the method further includes at least one of the following operations:
the first node transmits an offline notification message to the center node, the offline notification message being configured to indicate that the second node has been offline; and
the first node sends locally stored backup data of the second node to a data platform, the data platform being connected with the first node and the second node.

The embodiment provides another node connection method running in the abovementioned network architecture. Fig. 4 is a second flowchart of a node connection method according to an embodiment of the present disclosure. As shown in Fig. 4, the flow includes the following operations.

In S402, a second node receives a cooperative relationship establishment request sent by a first node, the cooperative relationship establishment request being generated by the first node according to a cooperative node confirmation sent by a center node.

In S404, the second node establishes a cooperative relationship with the first node according to the cooperative relationship establishment request.

In at least one exemplary embodiment, an executer of the operations may be a communication node, a gateway and the like, and may be, but is not limited to be, applied to a ubiquitous network/Internet of things application such as a smart home system, an Internet of vehicles system, a power grid system and a smart city system. In the embodiment, the second node plays a role as a node passively establishing the cooperative relationship according to the request.

In at least one exemplary embodiment, before the operation that the second node establishes the cooperative relationship with the first node according to the cooperative relationship establishment request, the method further includes the following operations.

In S31, the second node verifies and authenticates the first node.

In S32, after the first node passes verification and authentication, the second node judges whether a local resource meets a service requirement of the first node or not.

In S33, when it is determined that the local resource meets the service requirement of the first node, the second node assigns a network resource to the first node.

In at least one exemplary embodiment, after the operation that the second node establishes the cooperative relationship with the first node according to the cooperative relationship establishment request, the method further includes that: the second node sends backup data to the first node according to a predetermined period. Mutual data backup is implemented.

In at least one exemplary embodiment, after the operation that the second node sends the backup data to the first node according to the predetermined period, the method further includes that: the second node locally deletes the backup data that has been sent.

In at least one exemplary embodiment, after the operation that the second node sends the backup data to the first node according to the predetermined period, the method further includes that: the second node monitors an active state of the first node; and the second node determines according to the active state that the first node is in an offline state or an online state.

After the operation that the first node determines according to the active state that the second node is in the offline state, the method includes at least one of the following operations:
the second node transmits an offline notification message to the center node, the offline notification message being configured to indicate that the first node has been offline; and
the second node sends locally stored backup data of the first node to a data platform, the data platform being connected with the first node and the second node.

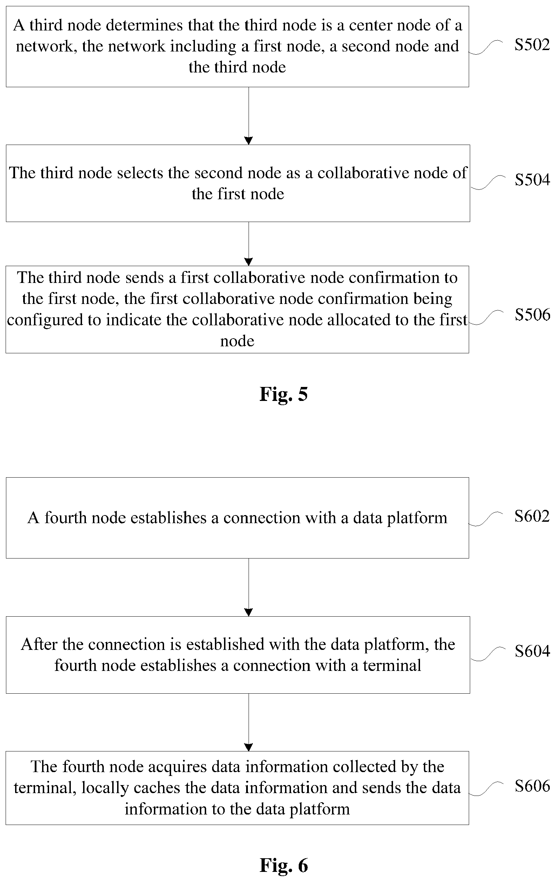

The embodiment provides another node connection method running in the abovementioned network architecture. Fig. 5 is a third flowchart of a node connection method according to an embodiment of the present disclosure. As shown in Fig. 5, the flow includes the following operations.

In S502, a third node determines that the third node is a center node of a network, the network including a first node, a second node and the third node.

In S504, the third node selects the second node as a cooperative node of the first node.

In S506, the third node sends a first cooperative node confirmation to the first node, the first cooperative node confirmation being configured to indicate the cooperative node assigned to the first node.

In at least one exemplary embodiment, an executer of the operations may be a communication node, a gateway and the like, and may be, but is not limited to be, applied to a ubiquitous network/Internet of things application such as a smart home system, an Internet of vehicles system, a power grid system and a smart city system. In the embodiment, the third node plays a role as the center node, selects a cooperative node for a target node in the network and also has a function of an ordinary node.

In at least one exemplary embodiment, after the operation that the third node sends first assignment information (the first cooperative node confirmation) to the first node, the method further includes the following operations.

In S41, the center node receives an offline notification message sent by the first node, the offline notification message being configured to indicate that the second node has been offline.

In S42, the center node tries to communicate with the second node, and after trying for communication fails, determines that the second node has been offline.

In S43, after it is determined that the second node has been offline, the center node sends second assignment information to the first node, the first assignment information being configured to indicate a cooperative node assigned to the first node.

The embodiment provides another node connection method running in the abovementioned network architecture. Fig. 6 is a fourth flowchart of a node connection method according to an embodiment of the present disclosure. As shown in Fig. 6, the flow includes the following operations.

In S602, a fourth node establishes a connection with a data platform.

In S604, after the connection is established with the data platform, the fourth node establishes a connection with a terminal.

In S606, the fourth node acquires data information collected by the terminal, locally caches the data information and sends the data information to the data platform. In at least one exemplary embodiment, the terminal includes a sensor, a peripheral device and the like.

In at least one exemplary embodiment, an executer of the operations may be a communication node, a gateway and the like, and may be, but is not limited to be, applied to a ubiquitous network/Internet of things application such as a smart home system, an Internet of vehicles system, a power grid system and a smart city system. In the embodiment, the fourth node plays a role as any node in a network, including an ordinary node and a center node.

In at least one exemplary embodiment, after the operation that the fourth node sends the data information to the data platform, the method further includes that: the fourth node locally deletes the data information and requests a cooperative node of the fourth node for locally deleting the data information.

In at least one exemplary embodiment, the operation that the fourth node establishes the connection with the terminal includes the following operations.

In S51, the fourth node broadcasts access information in a range of a local area network, the access information being configured to request the terminal for accessing the fourth node.

In S52, the fourth node receives a connection establishment request sent by the terminal, the connection establishment request containing device information of the terminal.

In S53, the fourth node establishes the connection with the terminal according to the device information.

In at least one exemplary embodiment, the operation that the fourth node establishes the connection with the terminal according to the device information includes the following operations.

In S61, the fourth node sends the device information to the data platform.

In S62, the fourth node receives registration confirmation information fed back by the data platform, the registration confirmation information being configured to indicate that registration of the terminal in the data platform is completed.

In S63, after the registration confirmation information is received, the fourth node establishes the connection with the terminal.

Through the above descriptions about the implementation modes, those skilled in the art may clearly know that the methods according to the embodiment may be implemented in a manner of combining software and a required universal hardware platform and, of course, may also be implemented through hardware, but the former is an exemplary implementation mode under many circumstances. Based on such an understanding, the technical solutions of the present disclosure substantially or parts making contributions to a conventional art may be embodied in form of a software product. The computer software product is stored in a storage medium (for example, a Read-Only Memory (ROM)/Random Access Memory (RAM), a magnetic disk and an optical disk), including a plurality of instructions configured to enable a terminal device (which may be a mobile phone, a computer, a server, a network device or the like) to execute the method of each embodiment of the present disclosure.

### Embodiment 2

The embodiment is an optional embodiment of the present disclosure, and is adopted to completely describe the solutions of the present application in combination with specific examples in detail.

According to the embodiment, data is backed up between cooperative nodes, and when it is found that a cooperative node may not be connected, a failure is actively reported to a management center instead of the cooperative node, and the collected data backed up before is reported.

In the embodiment, a node device (for example, an ordinary node and a center node) includes a selection module, a monitoring module, a management module and a control module.

The selection module is configured to realize a cooperative node selection function, including center node determination, node information coding and cooperative node assignment functions.

The monitoring module is configured to realize a cooperative node monitoring function, including monitoring an active state of a cooperative node according to received active information.

The control module is configured to realize a cooperative node access control function, including controlling connection establishment and connection release between the cooperative nodes.

The management module is configured to realize a node management function, and includes an access management submodule and a data management submodule. The access management submodule includes node access management. The data management submodule includes cooperative data management.

In a network that the embodiment is applied to, it is necessary to determine a center node, and each node is required to upload data information to a data platform. Each node has at most two cooperative nodes, and the cooperative nodes may monitor active states of each other and back up the data information of each other. The center node is any node (specified, or randomly assigned or selected according to a predetermined strategy) in the network, has all functions of an ordinary node and may also assign the cooperative nodes to all the nodes in the network according to information such as a topology of a network.

The embodiment also includes the following examples.

### Example 1: cooperative relationship establishment method embodiment

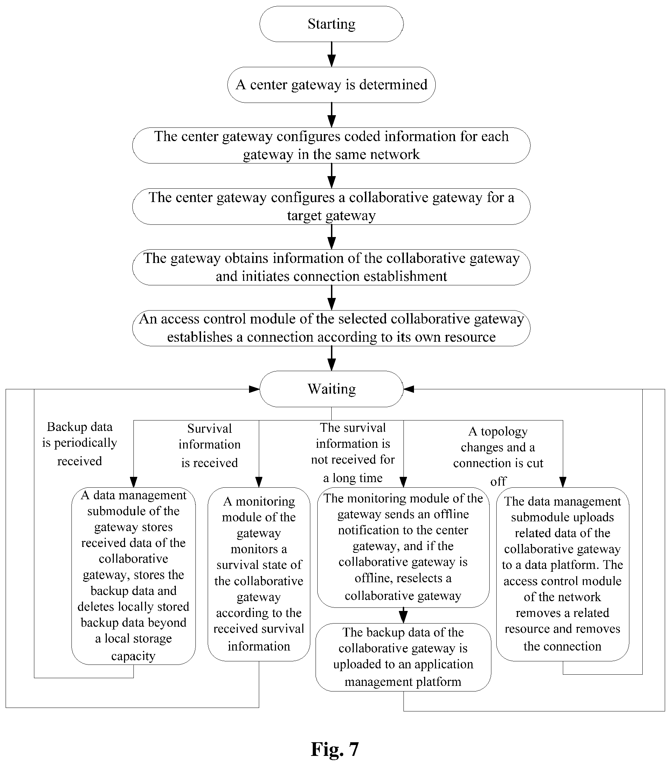

The embodiment provides a cooperative relationship establishment and/or releasing method. Referring to Fig. 7, Fig. 7 is a flowchart of a cooperative relationship establishment method according to the embodiment. The cooperative relationship establishment method includes the following operations.

In S101, when a network is constructed or a topology of a network changes, a selection module of any gateway acquires suitability, determined by the gateway and gateways in the network based on their own node states, that they serve as a center gateway, and determines the gateway with the highest suitability as the center gateway (corresponding to the third node in the abovementioned embodiment) of the network.

In at least one exemplary embodiment, the suitability may be an energy value, a power value, a bandwidth value, a weighted mean and the like. For example, the gateway with the highest energy value, power value or bandwidth value is the center gateway.

In S102, the selection module of the center gateway configures coding information for each gateway in the same network.

It is to be noted that the coding information may be a code of position information and a code of application related information.

In S103, the selection module of the center gateway acquires the coding information of a target gateway and selects a cooperative gateway meeting a preset requirement for the target gateway from multiple gateways in the same network based on the coding information of the target gateway.

In S104, the selection module of the target gateway, after receiving a cooperative gateway determination message sent by the center gateway, sends a cooperative relationship establishment request to a control module of the cooperative gateway selected by the center gateway.

In S105, the control module of the cooperative gateway, after the target gateway passes verification and authentication, judges whether a local resource meets a service requirement of the target gateway or not, assigns a resource to the target gateway and confirms to establish a cooperative relationship.

In S106, after the cooperative relationship is established, a data management submodule of the cooperative gateway receives backup data sent by the target gateway according to a preset period and deletes locally stored backup data beyond a local storage capacity until the local storage capacity is not exceeded.

In S107, a monitoring module of the gateway monitors an active state of the cooperative node according to received active information of the cooperative gateway thereof.

In S108, the monitoring module of the gateway, when judging that a present state of the cooperative node thereof is offline, transmits a notification message configured to indicate that the cooperative gateway thereof has been offline to the center gateway.

In S109, the center gateway, after receiving the notification message, tries to communicate with the cooperative gateway and, when trying for communication fails, determines that the present state of the cooperative gateway is offline, and the selection module of the center gateway reassigns a cooperative gateway.

In S109, after the cooperative relationship is released, a data management module of the gateway uploads backup data of the cooperative gateway thereof to a data platform.

In S110, when it is necessary to perform cooperative gateway reselection or cut off a connection, the data management submodule of the cooperative gateway uploads related data of the cooperative gateway thereof to the data platform, and meanwhile, an access control module of the cooperative gateway releases the local related resource of the cooperative gateway thereof and confirms to remove the connection.

### Example 2: connection establishment method embodiment

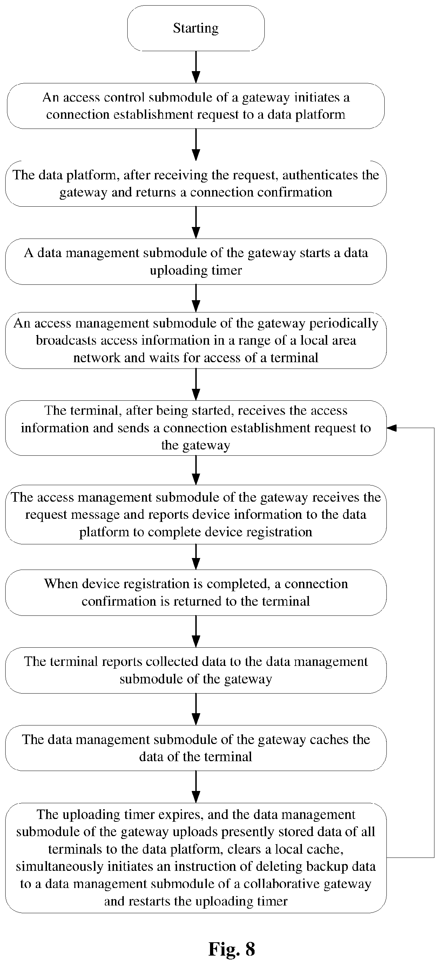

The embodiment provides a connection establishment method. Referring to Fig. 8, Fig. 8 is a flowchart of a connection establishment method according to the embodiment. The connection establishment method includes the following operations.

In S201, after a gateway (corresponding to the fourth node in the abovementioned embodiment) is started, an access management submodule of the gateway initiates a connection establishment request to a data platform, the request message including device information of the gateway.

In S202, the data platform, after receiving the request message, authenticates and verifies the gateway according to the device information, and after successful authentication and verification, the data platform returns a connection confirmation to the gateway.

In S203, after a connection is established, a data management submodule of the gateway starts a data uploading timer.

In S204, the access management submodule of the gateway periodically broadcasts access information in a range of a local area network and waits for access of a terminal.

In S205, the terminal, after being started, receives the access information and sends a connection establishment request to the gateway, the request message including device information of the terminal.

In S206, the access management submodule of the gateway, after receiving the request message, reports the device information of the terminal to the data platform to complete device registration of the terminal in the data platform, and after device registration, the data platform returns a registration confirmation to the gateway.

In S207, after device registration is completed, the access management submodule of the gateway returns a connection confirmation to the terminal.

In S208, after a connection is established, the terminal periodically reports collected data information to the data management submodule of the gateway.

In S209, the data management submodule of the gateway caches the data information reported by the terminal.

In S210, when the data uploading timer expires, the data management submodule of the gateway uploads presently stored data information collected by all terminals to the data platform, clears a local cache, simultaneously sends an instruction of deleting locally stored backup data of a cooperative gateway thereof to a data management submodule of the cooperative gateway and restarts the data uploading timer.

For the problem that a structure of a cooperative node is not described in the conventional art, the embodiment provides a cooperative node device and an application method thereof. Cooperation between nodes is implemented.

### Embodiment 3

The embodiment of the present disclosure also provides a storage medium, in which a computer program is stored, the computer program being configured to run to execute the operations in any abovementioned method embodiment.

In at least one exemplary embodiment, the storage medium may be configured to store a computer program configured to execute the following operations.

In S1, a cooperative node confirmation is received from a center node, the cooperative node confirmation being configured to indicate an assigned cooperative node.

In S2, a cooperative relationship with a second node is established and/or released according to the cooperative node confirmation.

In at least one exemplary embodiment, the storage medium may include, but not limited to, various medium capable of storing computer programs such as a U disk, a ROM, a RAM, a mobile hard disk, a magnetic disk or an optical disk.

The embodiment of the present disclosure also provides an electronic device, which includes a memory and a processor. A computer program is stored in the memory. The processor is configured to run the computer program to execute the operations in any abovementioned method embodiment.

In at least one exemplary embodiment, the electronic device may further include a transmission device and an input/output device. The transmission device is connected with the processor, and the input/output device is connected with the processor.

In at least one exemplary embodiment, the processor in the embodiment may be configured to execute the following operations through the computer program.

In S1, a cooperative node confirmation is received from a center node, the cooperative node confirmation being configured to indicate an assigned cooperative node.

In S2, a cooperative relationship with a second node is established and/or released according to the cooperative node confirmation.

In at least one exemplary embodiment, specific examples in the embodiment may refer to the examples described in the abovementioned embodiments and optional implementation modes and will not be elaborated in the embodiment.

It is apparent that those skilled in the art should know that each module or each step of the present disclosure may be implemented through a universal computing device. They may be concentrated in a single computing device or distributed in a network formed by multiple computing devices. In at least one exemplary embodiment, they may be implemented by program codes executable for the computing devices and thus may be stored in a storage device for execution with the computing devices. Moreover, in some cases, the shown or described operations may be executed in sequences different from those described here, or may form various integrated circuit modules respectively, or multiple modules or operations therein may form a single integrated circuit module for implementation. Therefore, the present disclosure is not limited to any specific hardware and software combination.

The above is only the exemplary embodiment of the present disclosure and not intended to limit the present disclosure. For those skilled in the art, the present disclosure may have various modifications and variations. Any modifications, equivalent replacements, improvements and the like made within the principle of the present disclosure shall fall within the scope of protection of the present disclosure.

### Industrial Applicability

The present disclosure is applied to the field of communication. Through the present disclosure, all nodes in a topological network may have cooperative nodes, ordinary backup and monitoring between the nodes may be implemented, the technical problem in the related art that a node may not be cooperatively monitored and backed up is solved, and stability and failure resistance of the network are improved.

## Claims

1. A communication device, comprising:
a selection module, configured to select a second node;
a control module, configured to establish and/or release a cooperative relationship with the second node; and
a monitoring module, configured to, after the cooperative relationship is established with the second node, monitor an active state of the second node.

2. The communication device as claimed in claim 1, wherein the selection module comprises:
a first selection unit, configured to, when a network is constructed or a topology of a network changes, determine a center node of the network.

3. The communication device as claimed in claim 1, wherein, when the communication device is a center node, the selection module further comprises:
a configuration unit, configured to configure coding information for each node in a network; and
a second selection unit, configured to assign one or more cooperative nodes to one or more nodes in the network according to the coding information.

4. The communication device as claimed in claim 1, wherein the control module comprises:
a sending unit, configured to, after a cooperative node confirmation sent by a center node is received, send a cooperative relationship establishment request to a cooperative node selected by the center node.

5. The communication device as claimed in claim 1, wherein the control module comprises:
a first confirmation unit, configured to, after a cooperative relationship establishment request sent by the second node is received, determine that a local resource meets a service requirement of the second node, assign a resource to the second node and confirm to establish the cooperative relationship with the second node.

6. The communication device as claimed in claim 5, wherein the control module comprises:
a second confirmation unit, configured to, when cooperative node reselection is performed or a connection is cut off, locally release a related resource of the second node and confirm to release the cooperative relationship with the second node.

7. The communication device as claimed in claim 1, wherein the monitoring module comprises:
a monitoring unit, configured to monitor the active state of the second node according to received active information of the second node.

8. The communication device as claimed in claim 7, wherein the monitoring module further comprises:
a transmitting unit, configured to, when the active state of the second node indicates that the second node is offline, transmit a notification message configured to indicate that the cooperative node has been offline to the center node.

9. The communication device as claimed in claim 8, wherein, when the communication device is the center node, the monitoring module comprises:
a confirming unit, configured to, after the notification message is received, confirm the offline state of the second node which is indicated as the offline state when an attempt to communicate with the second node fails and instruct the selection module to reassign a cooperative node.

10. The communication device as claimed in any one of claims 1 to 9, further comprising:
a management module, configured to implement access management and data management over the communication device.

11. The communication device as claimed in claim 10, wherein the management module comprises:
an access management unit, configured to, after the communication device is started, initiate a first connection establishment request to a data platform, receive a connection confirmation returned by the data platform after the communication device passes authentication and verification, periodically broadcast access information in the network, receive a second connection establishment request sent by a terminal after receiving the access information, receive a registration confirmation returned by the data platform after device registration of the terminal and return a connection confirmation to the terminal.

12. The communication device as claimed in claim 11, wherein the management module comprises:
a data management unit, configured to, after the cooperative relationship is established with the second node, receive backup data sent by the second node according to a preset period, delete locally stored backup data beyond a local storage capacity and, after the cooperative relationship is released, upload the backup data of the second node to the data platform.

13. The communication device as claimed in claim 12, wherein the data management unit is further configured to:
after a connection is established with the data platform, start a data uploading timer, when the data uploading timer expires, upload presently stored data information collected by the terminal to the data platform, send an instruction configured to request for deleting the locally stored backup data of the communication device to the second node, restart the data uploading timer and, after a connection is established with the terminal, cache data information collected and periodically reported by the terminal.

14. Anode connection method, comprising:
receiving, by a first node, a cooperative node confirmation from a center node, the cooperative node confirmation being configured to indicate an assigned cooperative node; and
establishing and/or releasing, by the first node, a cooperative relationship with a second node according to the cooperative node confirmation.

15. Anode connection method, comprising:
receiving, by a second node, a cooperative relationship establishment request sent by a first node, the cooperative relationship establishment request being generated by the first node according to a cooperative node confirmation sent by a center node; and
establishing, by the second node, a cooperative relationship with the first node according to the cooperative relationship establishment request.

16. Anode connection method, comprising:
determining, by a third node, that the third node is a center node of a network, the network comprising a first node, a second node and the third node;
selecting, by the third node, the second node as a cooperative node of the first node; and
sending, by the third node, a first cooperative node confirmation to the first node, the first cooperative node confirmation being configured to indicate the cooperative node assigned to the first node.

17. Anode connection method, comprising:
establishing, by a fourth node, a connection with a data platform;
after the connection is established with the data platform, establishing, by the fourth node, a connection with a terminal; and
by the fourth node, acquiring data information collected by the terminal, locally caching the data information and sending the data information to the data platform.

18. A storage medium, in which a computer program is stored, the computer program being configured to run to execute the methods as claimed in any one of claims 14 to 17.

19. An electronic device, comprising a memory and a processor, wherein a computer program is stored in the memory; and the processor is configured to run the computer program to execute the methods as claimed in any one of claims 14 to 17.
